# EUROPEAN PATENT APPLICATION

(11) **EP 3 783 577 A1**
(43) Date of publication of application: **24.02.2021**
(21) Application number: 20190019.8
(22) Date of filing: 07.08.2020
(51) Int. Cl.: G07G 1/00, G06Q 20/18

(54) **CHECKOUT SYSTEM AND CHECKOUT METHOD**

(30) Priority: 22.08.2019 JP 2019152311
(71) Applicant: Toshiba Tec Kabushiki Kaisha, Shinagawa-ku Tokyo 141-8562 (JP)
(72) Inventor: KAWAMOTO, Tsuyoshi, Shinagawa-ku, Tokyo 141-8562 (JP)
(74) Representative: Bandpay & Greuter

(57) **Abstract**

A checkout system includes an interface, a memory that stores commodity data in which a name and a price of a commodity are associated with a commodity ID, and a processor configured to control the interface to establish a connection with a customer terminal. Upon receipt of a store code from the terminal, the processor determines whether the store code is valid. If the store code is valid, the processor controls the interface to transmit a command to the terminal for completing a check-in process at a store corresponding to the store code. Upon receiving a commodity ID from the terminal that has completed the check-in process, the processor retrieves, from the memory, a name and a price of a commodity associated with the commodity ID. The processor performs checkout processing using the retrieved name and price of the commodity if a request for checkout is received from the terminal.

## Description

### FIELD

Embodiments described herein relate generally to a checkout system and a checkout method.

### BACKGROUND

Commodity sales processing systems including user terminals are known. In such systems, customers are permitted to operate the user terminals so that they can register commodities to be purchased by themselves.

In such commodity sales processing systems, it is common for a store to lend customers a user terminal. For example, the user terminals can be attached to shopping carts for use at the store so that the customers can operate the user terminals to read identification codes of commodities when the commodities are being put in the shopping carts for purchase. In such a case, since the user terminals are provided by the store, settings required for the user terminals to perform the self-service registration can be made in advance.

In other systems, it is possible for customers to use their own communication terminals, such as personal smartphones, as the user terminals for commodity registration. When communication terminals owned by individual customers can be used, the customers may use such personal terminals to register commodities s at several different stores at which such a system has been introduced or adopted. However, in order to permit use of the customer's own communication terminals as user terminals in such a system, it is generally necessary to correctly configure the settings of such communication terminals so that they can communicate with store servers.

### SUMMARY OF INVENTION

To solve the above described problems, there is provided a checkout apparatus comprising a network interface, a memory that stores commodity data in which a name and a price of a commodity are associated with a commodity ID, and a processor. The processor is configured to control the network interface to establish a connection with a customer terminal; to determine whether a store code is valid upon receipt of the store code from the customer terminal; to control the network interface to transmit a command to the customer terminal for completing a check-in process in a store corresponding to the store code if the store code is valid; to retrieve, from the memory, a name and a price of a commodity associated with a commodity ID when the commodity ID is received from the customer terminal that has completed the check-in process; and to perform checkout processing using the retrieved name and price of the commodity when a request for checkout from the customer terminal is received.

Preferably, the processor is further configured to generate registration data for storing the retrieved name and price of the commodity in the memory.

Preferably, the memory further stores master commodity data that maintains a name and a price of a commodity in association with a commodity ID, and the processor is further configured to detect changes in the master commodity data and update the commodity data to match the changed master commodity data.

Preferably, the memory further stores payment information indicating one or more payment methods accepted at the store, and the processor is further configured to control the network interface to transmit the payment information to the customer terminal after the connection has been established.

Preferably, the checkout processing uses a payment method selected by the customer terminal.

Preferably, the store code is represented by a two-dimensional code.

Preferably, the store code is read by the customer terminal.

Preferably, the two-dimensional code includes, encoded therein, connection information for the customer terminal to connect to the checkout system.

In another exemplary embodiment, there is also provided a checkout system comprising the checkout apparatus as described above configured as a server; and a customer terminal configured to read a code displayed at a store and connect to the server using information encoded in the code, the encoded information including a network setting required to connect to the server and a store code of the store.

Preferably, the customer terminal displays the name and price of the commodity on a screen.

Preferably, the customer terminal is configured as a hand-held mobile terminal.

Preferably, the customer terminal is configured to be attached to a shopping card.

In yet another exemplary embodiment, there is also provided a checkout method comprising: storing, in a memory of a server, commodity data in which a name and a price of a commodity are associated with a commodity ID; establishing a connection between a customer terminal and the server; upon receipt of a store code from the customer terminal, determining whether the store code is valid; transmitting from the server to the customer terminal a command for completing a check-in process in a store corresponding to the store code if the store code is valid; upon receipt of a commodity ID from the customer terminal that has completed the check-in process, retrieving from the memory a name and a price of a commodity associated with the received commodity ID; and performing checkout processing using the retrieved name and price of the commodity when a request for checkout from the customer terminal is received.

Preferably, the method further comprises generating registration data for storing the retrieved name and price of the commodity in the memory.

Preferably, the method further comprises storing in the memory master commodity data that maintains a name and a price of a commodity in association with a commodity ID; and detecting changes in the master commodity data and update the commodity data to match the changed master commodity data.

### DESCRIPTION OF THE DRAWINGS

FIG. 1 is a diagram illustrating a commodity sales processing system according to an embodiment.
FIG. 2 is a schematic diagram illustrating a data structure of store setting information.
FIG. 3 is a block diagram of a user terminal.
FIG. 4 is a schematic diagram illustrating a management tale.
FIG. 5 is a block diagram of a store server.
FIG. 6 is a block diagram of a virtual point of sale (POS) server.
FIG. 7 is a flowchart information processing performed the user terminal.
FIG. 8 is a flowchart of information processing performed by the user terminal.
FIG. 9 is a flowchart of information processing performed by the user terminal.
FIG. 10 is a flowchart of information processing performed by the store server.
FIG. 11 is a flowchart of information processing performed by the virtual POS server.
FIG. 12 is a flowchart of information processing performed by the virtual POS server.
FIG. 13 is a flowchart of information processing performed by the store server.
FIG. 14 is a schematic diagram illustrating a check-in screen displayed on the user terminal.
FIG. 15 is a schematic diagram illustrating a camera screen displayed on the user terminal.
FIG. 16 is a schematic diagram illustrating a camera screen displayed on the user terminal.
FIG. 17 is a schematic diagram illustrating a wireless connection screen displayed on the user terminal.
FIG. 18 is a schematic diagram illustrating a check-in completion screen displayed on the user terminal.
FIG. 19 is a schematic diagram illustrating a registration screen displayed on the user terminal.
FIG. 20 is a schematic diagram illustrating a registration screen displayed on the user terminal.
FIG. 21 is a schematic diagram illustrating a payment selection screen displayed on the user terminal.
FIG. 22 is a schematic diagram illustrating a checkout barcode screen displayed on the user terminal.

### DETAILED DESCRIPTION

According to one embodiment, a checkout system includes a network interface, a memory that stores commodity data in which a name and a price of a commodity are associated with a commodity ID, and a processor. The processor is configured to control the network interface to establish a connection with a customer terminal. The processor is configured to determine whether the store code is valid upon receiving a store code from the customer terminal. Upon determining that the store code is valid, the processor controls the network interface to transmit a command to the customer terminal a command for completing a check-in process at a store corresponding to the store code. When a commodity ID is received from a customer terminal, the processor retrieves, from the memory, a name and a price of a commodity associated with the received commodity ID. The processor is also configured to perform checkout processing using the retrieved name and price of the commodity if a request for checkout is received from the customer terminal.

Hereinafter, various example embodiments of a commodity sales processing system in which a communication terminal owned by an individual can be connected to a server of a store and then used for self-service registration, a commodity sales processing device, and a control method therefor, and a commodity sales processing method will be described with reference to the drawings.

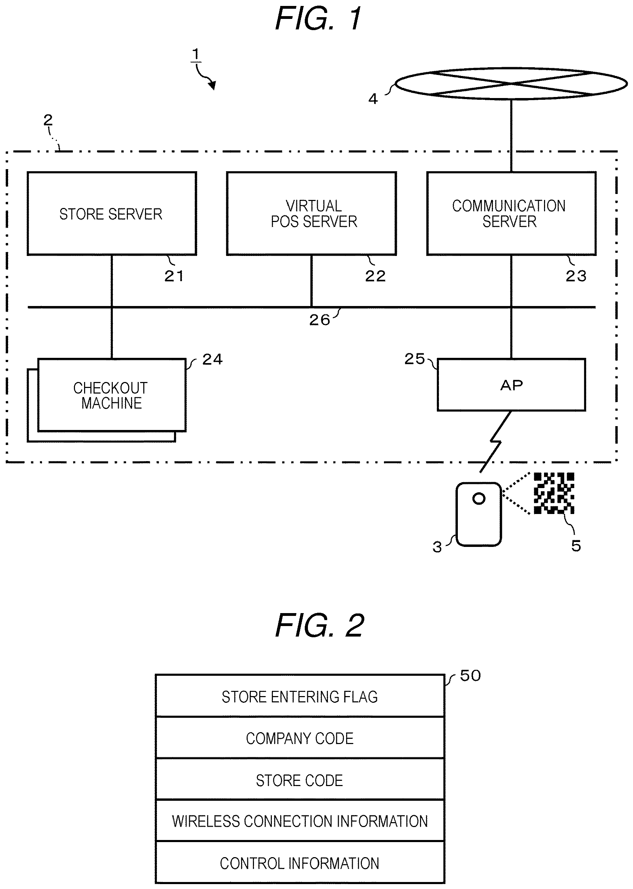

FIG. 1 is a diagram illustrating an overall configuration of a commodity sales processing system 1 according to an embodiment. The commodity sales processing system 1 includes a commodity sales system 2 (also referred to as a commodity sales apparatus 2) and a user terminal 3. The commodity sales system 2 includes a store server 21, a virtual POS server 22, a communication server 23, a checkout machine 24, and an access point 25, which are connected to each other by a wireless local area network (LAN) 26. The commodity sales system 2 is a system that connects the user terminal 3 to the store server 21, the virtual POS server 22, and the like so that self-service registration can be performed using the user terminal 3 in conformity with a commodity sales processing method according to an embodiment. Although not illustrated, in the commodity sales system 2, a plurality of user terminals 3 are connected to the store server 21, the virtual POS server 22, and the like at a time so that self-service registration can be performed using each user terminal 3.

The store server 21 is a computer that supports general store business. The virtual POS server 22 is a computer that performs, in cooperation with the user terminal 3, operations that might otherwise be performed by a conventional POS terminal. The communication server 23 is a server that supports data communication performed with an external system via a network 4.

The checkout machine 24 is a terminal that settles a commodity to be purchased. The settlement method is not particularly limited. Any known settlement method, such as cash settlement, credit card settlement, or electronic money settlement, can be used.

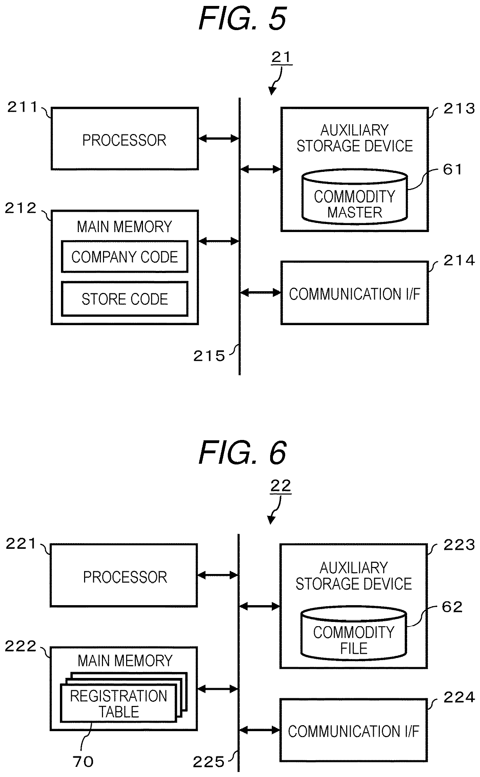

In some examples, the checkout machine 24 may also have a commodity registration function for permitting registration of a commodity to be purchased. For example, when a barcode of a commodity is read by a scanner connected to the checkout machine 24, the checkout machine 24 checks the store server 21 for a commodity code included in the barcode. In response to the inquiry, the store server 21 retrieves commodity data including a commodity name, price, and the like of the commodity identified by the commodity code from a commodity master file 61 (see FIG. 5) and outputs the commodity data to the checkout machine 24. Therefore, the checkout machine 24 may register sales data for the commodity based on the retrieved commodity data. Then, the checkout machine 24 handles settlement processing for the commodity purchase.

In some examples, such a checkout machine 24 may be a conventional checkout machine at which a salesclerk inputs information regarding settlement or a self-service checkout machine at which a customer inputs information regarding settlement. The commodity sales system 2 may include both types or either type of the checkout machines. In some examples, a standard POS terminal of the related art can be adopted. Likewise, in some examples, a known self-service or semi-self-service type checkout machine may be used as a checkout machine.

The access point 25 is communication equipment that is installed in a store as a relay device for each server (e.g., the store server 21, the virtual POS server 22, the communication server 23, and the like) of the commodity sales system 2 to communication with the user terminal 3 via a wireless LAN. The wireless LAN conforms to, for example, a standard of Wi-Fi®. In FIG. 1, only access point 25 is illustrated, but a plurality of access points 25 may be installed and connected to a wired LAN 26 depending on the size or the like of a store.

The commodity sales system 2 that has the configuration described above can be provided in a plurality of stores at which self-service registration of commodities is available using the user terminal 3 owned by a customer such as a smartphone. Alternatively, the commodity sales system 2 may be provided in a store in which self-service registration of commodities is available using the user terminal 3 owned by the store and mounted on a shopping cart such as a tablet terminal. In such a case, in the store, both a communication terminal owned by a customer and a communication terminal owned by the store and attached to a shopping cart can be used as the user terminal 3.

The user terminal 3 is a portable communication terminal. As described in detail later, the user terminal 3 has hardware that reads at least a two-dimensional data code 5. For example, a commercial smartphone, tablet terminal, or the like on which a digital camera is mounted can be used as the user terminal 3. In an embodiment, a communication terminal such as a smartphone personally owned by a customer is used as the user terminal 3.

The data code 5 is prepared for each store. The data code 5 is printed or presented, for example, an entrance of a store. The data code 5 is generated by encoding store setting information 50 (see FIG. 2) specific to a store or a company that operates the store. The values of the store setting information 50 vary depending on stores.

FIG. 2 is a schematic diagram illustrating a data structure of the store setting information 50. As illustrated in FIG. 2, the store setting information 50 includes a store entering flag, a company code, a store code, wireless connection information, and control information.

The store entering flag is 1-bit data for identifying whether the two-dimensional data code 5 is a data code for entering the store. In an embodiment, the store entering flag of the data code 5 for store entering is set to "1."

The company code is company identification data set for each company to identify the company that operates a store in which the data code 5 is presented. The store code is store identification data set for each store to identify the store in which the data code 5 is presented. The store code may overlap between different companies.

The wireless connection information is information necessary for the user terminal 3 to wirelessly connect to the commodity sales system 2 of the store specified by the company code and the store code. For example, a service set identifier (SSID) which is an identification name of the access point 25, a password set in the wireless LAN in the store, and data indicating a cryptographic key of a security mode (WPA2-PSK, WPA-PSK, WEP, or the like) set in the wireless LAN in the store are included in the wireless connection information.

The control information is information necessary to control an operation of the user terminal 3. For example, the control information indicates a timeout time for triggering an error process in communication in the wireless LAN, the number of retries to be done when an error occurs, or a threshold for battery check. The threshold is set to any value so that the user terminal 3 is not out of battery during shopping.

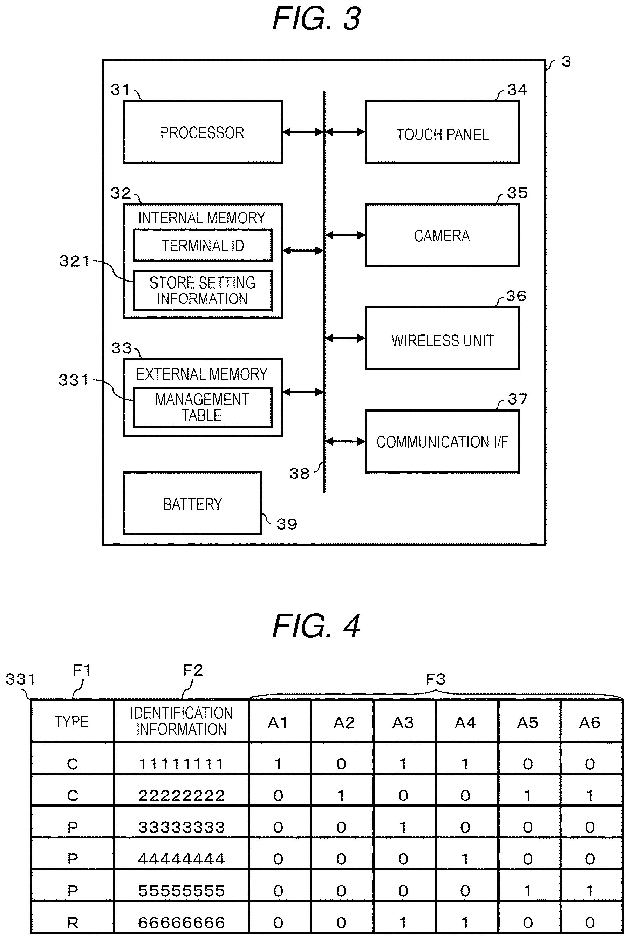

FIG. 3 is a block diagram of the user terminal 3. As illustrated in FIG. 3, the user terminal 3 includes a processor 31, an internal memory 32, an external memory 33, a touch panel 34, a camera 35, a wireless unit 36, a communication interface (I/F) 37, and a system transmission path 38. In the user terminal 3, a rechargeable battery 39 is mounted.

The system transmission path 38 is an address bus, a data bus, a control signal line, or the like. In the user terminal 3, the processor 31, the internal memory 32, the external memory 33, the touch panel 34, the camera 35, the wireless unit 36, and the communication interface 37 are connected via the system transmission path 38.

The processor 31 controls each unit of the user terminal 3 to perform various functions of the user terminal 3 in accordance with an operating system or an application program. The processor 31 is, for example, a central processing unit (CPU).

The internal memory 32 includes a nonvolatile memory area and a volatile memory area. The internal memory 32 stores an operating system and/or an application program in the nonvolatile memory area. The internal memory 32 stores data necessary for the processor 31 to control each unit of the user terminal 3 in the volatile area. In the internal memory 32, the volatile memory area is used as a work area in which data can be rewritten by the processor 31. The nonvolatile memory area is, for example, a read-only memory (ROM). The volatile memory area is, for example, a random access memory (RAM).

The external memory 33 is an auxiliary storage device, such as an SD memory car, a USB memory, or the like. The external memory 33 stores data which is used for the processor 31 to perform various processes, data that is generated through a process by the processor 31, or the like. The external memory 33 may store the foregoing application program.

The touch panel 34 is a device that serves as both an input device and a display device of the user terminal 3. The touch panel 34 detects a touch position on a displayed image and outputs information regarding the touch position to the processor 31.

The camera 35 is an imaging device built in the user terminal 3. The camera 35 operates as an imaging device for a still image or a moving image or a scanning device for a data code of a barcode, a two-dimensional code, or the like in accordance with an application program installed in the user terminal 3. The camera 35 may operate as a code reader.

The wireless unit 36 is a circuit that performs data communication in accordance with a communication protocol of a wireless LAN with the access point 25.

The communication interface 37 is a circuit that performs data communication with an external device connected via the Internet or a mobile communication network.

The user terminal 3 that has such a configuration stores a shopping support program in the internal memory 32 or the external memory 33, that is used during shopping in a store in which the commodity sales processing system 1 is introduced. A method of installing the shopping support program in the internal memory 32 or the external memory 33 is not particularly limited. The shopping support program can be installed in the built-in memory 32 or the external memory 33 from a removable recording medium or another computer via a network. Any recording medium can be used to install the shopping support program, e.g., an SD memory card or a USB memory.

The user terminal 3 stores a terminal ID in the nonvolatile memory area in the internal memory 32. The terminal ID is terminal identification data set for identifying each user terminal 3. The user terminal 3 uses a part of the volatile memory area in the internal memory 32 as an area 321 for storing the store setting information 50. In the area 321, the store setting information 50 obtained by analyzing an image of the data code imaged by the camera 35 is stored.

The user terminal 3 uses a part of the memory area in the external memory 33 to store a management table 331. The management table 331 is a data table for managing payment methods associated with a customer and available at stores in which self-service registration is available with the user terminal 3 owned by the individual customer. The management table 331 manages identification information about the payment methods such as identification information of a credit card, identification information of a membership card, and identification information of an electronic receipt user.

FIG. 4 is a schematic diagram illustrating the management tale 331. As illustrated in FIG. 4, the management table 331 includes a first field F1 of a type, a second field F2 of identification information, and a third field F3 of a setting flag. The plurality of third fields F3 are provided for codes An (where n is 1, 2, 3, ...). In FIG. 4, the management table 331 includes six third fields F3 of codes A1 to A6.

The code An is a code consisting of a company code and a store code. For example, when a company code is "001" and a store code is "0001," the code An is "0010001." Alternatively, the code An may be "0001001." Hereinafter, the code An is referred to as a combination code An.

Data stored in the first field F1 is "C," "P," or "R" in an embodiment. The data "C" corresponds to a credit card. The data "P" corresponds to a point card. The data "R" corresponds to an electronic receipt user.

Data stored in the second field F2 is determined in accordance with the data stored in the corresponding first field F1. Specifically, when the data stored in the first field F1 is "C," identification information of a credit card is stored in the corresponding second field F2. The identification information of a credit card may be a card number or may be a cooperation ID set at the time of cooperation with the credit card.

In this context, "credit card" includes a credit card issued by a credit company, a bank card issued by a bank, a store card issued by a retailer such as a supermarket or a convenience store, or the like. Which card can be used depends on the store. The communication server 23 of a store at which settlement with a credit card is permitted is connected to a server of the credit card issuing company or the management company via the network 4.

When data stored in the first field F1 is "P," identification information of a membership card is stored in the corresponding second field F2. The identification information of the membership card is, for example, a card number.

The membership card is a card that is issued by a store to a customer who is a member of rewards program or discount service provided by the store. The services include a loyalty point program, a member discount service, and the like. In some instances, the membership card can be used in chain stores or other stores operated by, or affiliated with, the same company. Alternatively, the membership card can be used in stores affiliated with the company providing the member services.

When data stored in the first field F1 is "R," identification information of an electronic receipt user is stored in the corresponding second field F2. The identification information of the electronic receipt user is an electronic receipt ID for specifying the communication terminal of a customer who has downloaded an application program for receiving an electronic receipt service. Hereinafter, the application program for the electronic receipt service is referred to as an electronic receipt application.

A customer who wants to receive a receipt as an electronic receipt downloads the electronic receipt application to a communication terminal such as a smartphone. Then, a new electronic receipt ID is stored in the communication terminal. The customer can receive a receipt as an electronic receipt by presenting an electronic receipt ID at a store during checkout processing if the store provides or participates in the electronic receipt service. The communication server 23 of the store providing the electronic receipt service is connected to a server of an electronic receipt service operation company, a so-called electronic receipt server, via the network 4. The communication server 23 adds the electronic receipt ID to receipt data of the transaction and transmits the receipt data to the electronic receipt server. The customer can the browse the receipt data for which the electronic receipt ID has been added by operating the communication terminal to access the electronic receipt server via the Internet and notifying the electronic receipt server of the electronic receipt ID.

A customer who owns a credit card performs an operation for setting identification information of the credit card in the management table 331. Through this operation, the identification information of the credit card is set in the first field F1 and the second field F2 of the management table 331 along with the type "R." Then, in the third fields F3, "1" is set for combination codes An indicating company codes and store codes in which the credit card can be used, and "0" is set for the other combination codes An.

A customer who owns a membership card performs an operation for setting identification information of the membership card in the management table 331. Through this operation, the identification information of the membership card is set in the first field F1 and the second field F2 of the management table 331 along with the type "P." Then, in the third fields F3, "1" is set for combination codes An indicating company codes and store codes in which the membership card can be used, and "0" is set for the other combination codes An.

A customer who owns an electronic receipt ID performs an operation for setting the electronic receipt ID in the management table 331. Through this operation, the electronic receipt ID is set in the first field F1 and the second field F2 of the management table 331 along with the type "R." Then, in the third fields F3, "1" is set for combination codes An indicating company codes and store codes in which the electronic receipt service is provided, and "0" is set for the other combination codes An.

The operation of setting various kinds of identification information in the management table 331 is not particularly limited. A customer may operate the user terminal 3 to set the identification information or may operate his or her computer or the like to which the user terminal 3 is connected to set the identification information. For the setting flag, for example, the store server 21 retrieves data of the management table 331 from the user terminal 3 wirelessly via the access point 25. Then, the store server 21 sets "1" in the setting flag corresponding to the identification information which can be used in the store, and sets "0" in a setting flag corresponding to identification information which is not usable. In this way, the management table 331 illustrated in FIG. 4 is generated in the external memory 33 of the user terminal 3.

FIG. 5 is a block diagram of the store server 21. The store server 21 includes a processor 211, a main memory 212, an auxiliary storage device 213, a communication interface 214, and a system transmission path 215. The system transmission path 215 is an address bus, a data bus, a control signal line, or the like. In the store server 21, the processor 211, the main memory 212, the auxiliary storage device 213, and the communication interface 214 are connected via the system transmission path 215.

The processor 211 controls each unit of the store server 21 to perform various functions of the store server 21 in accordance with an operating system or an application program. The processor 211 is, for example, a CPU.

The main memory 212 includes a nonvolatile memory area and a volatile memory area. The main memory 212 stores an operating system or an application program in the nonvolatile memory area. The main memory 212 stores data necessary for the processor 221 to perform a process of controlling each unit of the store server 21 in the nonvolatile or volatile memory area. In the main memory 212, the volatile memory area is used as a work area in which data can be rewritten by the processor 211. The nonvolatile memory area is, for example, a ROM. The volatile memory area is, for example, a RAM.

The auxiliary storage device 213 is an auxiliary storage device, such as an electric erasable programmable read-only memory (EEPROM), a hard disk drive (HDD), a solid-state drive (SSD), or the like. The auxiliary storage device 213 stores data which is used for the processor 211 to perform various processes, data that is generated by the processor 211, or the like. The auxiliary storage device 213 may store the above-described application program.

The application program stored in the main memory 212 or the auxiliary storage device 213 includes a control program for performing information processing in the store server 21. A method for installing the control program in the main memory 212 or the auxiliary storage device 213 is not particularly limited. The control program can be installed in the main memory 212 or the auxiliary storage device 213 from a removable recording medium or another computer via a network. Any recording medium can be used to install the application program, e.g., a CD-ROM or a memory card.

The communication interface 214 is connectable to the wired LAN 26. The communication interface 214 transmits and receives data to and from the virtual POS server 22, the communication server 23, the checkout machine 24, and the access point 25 via the wired LAN 26.

The processor 211 of the store server 21 can control the communication interface 214 to transmit and receive data to and from the user terminal 3 connected wirelessly to the access point 25. Here, the communication interface 214 functions as a communication unit to wirelessly communicate with the user terminal 3 owned by a customer.

The store server 21 that has such a configuration stores a store code of a store in which the store server 21 is managed and a company code of a company that operates the store in the nonvolatile memory area of the main memory 212.

The store server 21 stores the commodity master file 61 in the auxiliary storage device 213. The commodity master file 61 is a collection of commodity records in which data of commodities sold in the store is described. In the commodity records, commodity data such as a commodity code, a price, and a commodity name are stored. The commodity code is commodity identification data for identifying a commodity. A barcode indicating a commodity code is normally attached to each commodity.

FIG. 6 is a block diagram of main units of the virtual POS server 22. The virtual POS server 22 includes a processor 221, a main memory 222, an auxiliary storage device 223, a communication interface 224, and a system transmission path 225. The system transmission path 225 is an address bus, a data bus, a control signal line, or the like. In the virtual POS server 22, the processor 221, the main memory 222, the auxiliary storage device 223, and the communication interface 224 are connected via the system transmission path 225.

The processor 221 controls each unit of the virtual POS server 22 to perform various functions in accordance with an operating system or an application program. The processor 221 is, for example, a CPU.

The main memory 222 includes a nonvolatile memory area and a volatile memory area. The main memory 222 stores an operating system and an application program in the nonvolatile memory area. The main memory 222 stores data necessary for the processor 221 to control each unit in the nonvolatile or volatile memory area. In the main memory 222, the volatile memory area is used as a work area in which data can be rewritten by the processor 221. The nonvolatile memory area is, for example, a ROM. The volatile memory area is, for example, a RAM.

The auxiliary storage device 223 is an auxiliary storage device such as an EEPROM, an HDD, an SSD, or the like. The auxiliary storage device 223 stores data which is used for the processor 221 to perform various processes, data that is generated by the processor 221, or the like. The auxiliary storage device 223 may store the above-described application program.

An application program stored in the main memory 222 or the auxiliary storage device 223 includes a control program for performing information processing in the virtual POS server 22. A method for installing the control program in the main memory 222 or the auxiliary storage device 223 is not particularly limited. The control program can be installed in the main memory 222 or the auxiliary storage device 223 from a removable recording medium or another computer via a network. Any recording medium may be used to install the control program, e.g., a CD-ROM or a memory card.

The communication interface 224 is connectable to the wired LAN 26. The communication interface 224 transmits and receives data to and from the store server 21, the communication server 23, the checkout machine 24, and the access point 25 via the wired LAN 26.

The processor 221 of the POS server 22 can control the communication interface 224 to transmit and receive data to and from the user terminal 3 connected wirelessly to the access point 25. Here, the communication interface 224 functions as a communication unit to wirelessly communicate with the user terminal 3 owned by a customer.

The virtual POS server 22 that has such a configuration uses a part of the volatile memory area in the main memory 222 as an area for generating a registration table 70. The registration table 70 is generated for each user terminal 3 connected via the communication unit. The registration table 70 stores accumulating sales data of commodities or the like to be used in the self-service registration by the user terminal 3.

The virtual POS server 22 stores a commodity file 62 in the auxiliary storage device 223. The commodity file 62 stores at least a commodity name and a unit price of a commodity record stored in and copied from the commodity master file 61. For example, whenever the unit price of the commodity record stored in the commodity master file 61 is changed, the commodity record stored in the commodity file 62 is also updated in real time. Since a method of updating the commodity record stored in the commodity master file 61 is known, description thereof will be omitted here.

Here, the commodity file 62 stores the commodity data including the name and the price of a commodity identified with the commodity identification data in association with the commodity identification data. The commodity master file 61 stores at least the commodity data stored in the commodity file 62.

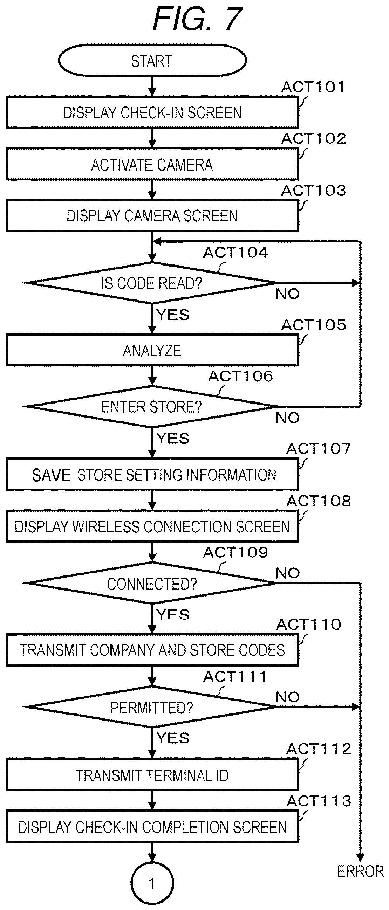

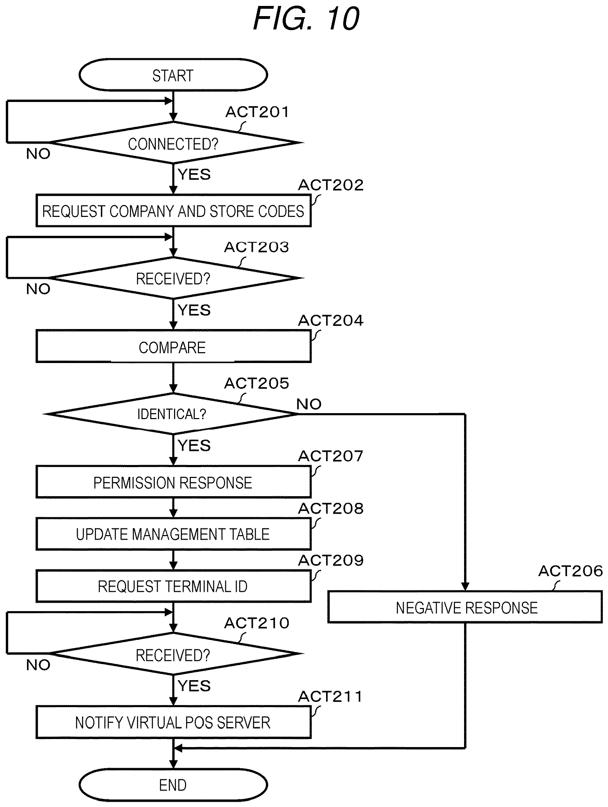

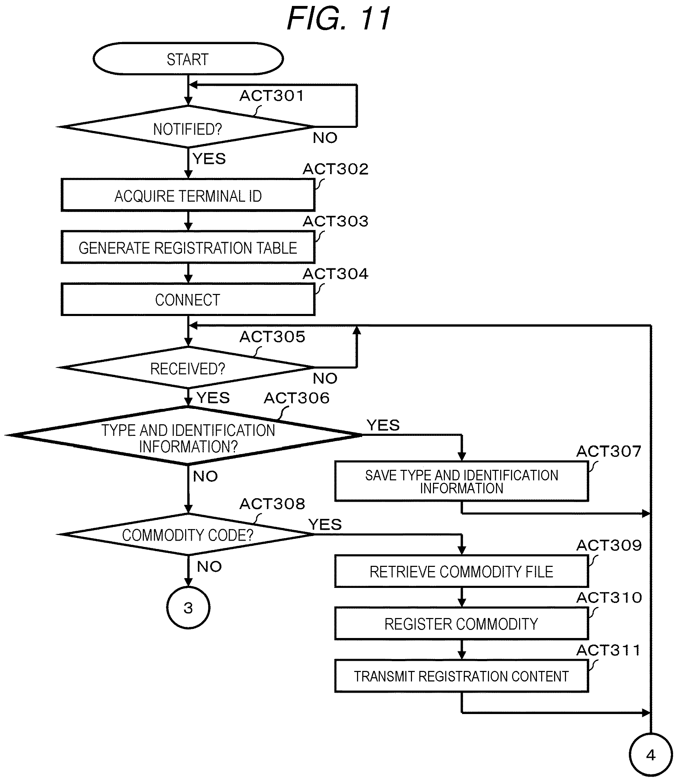

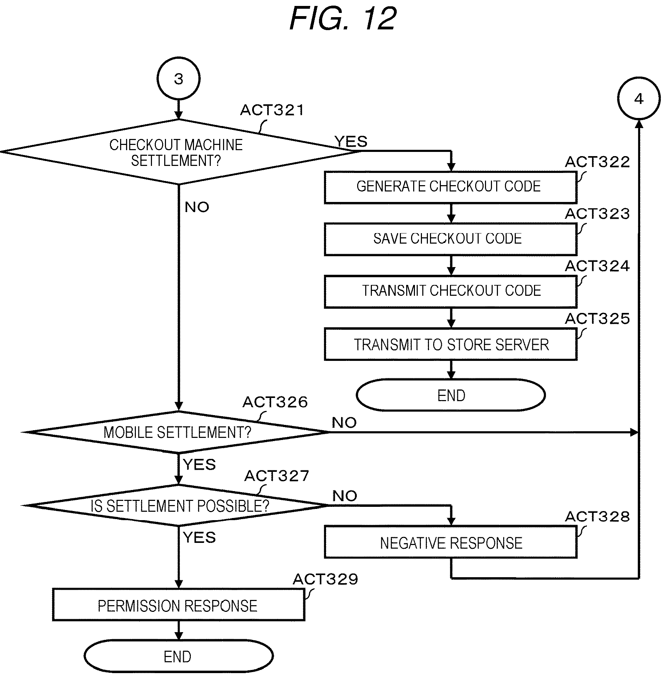

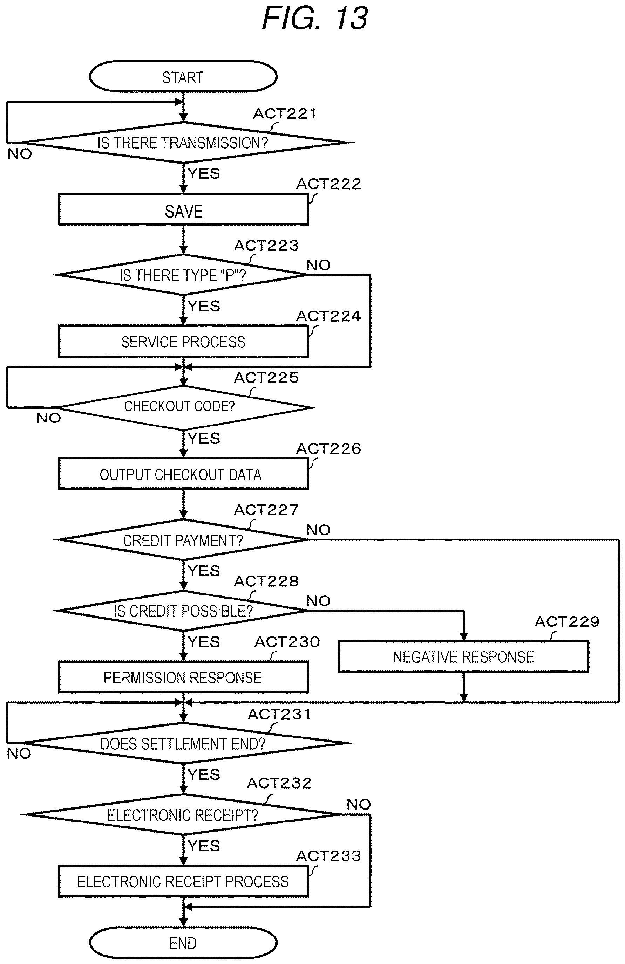

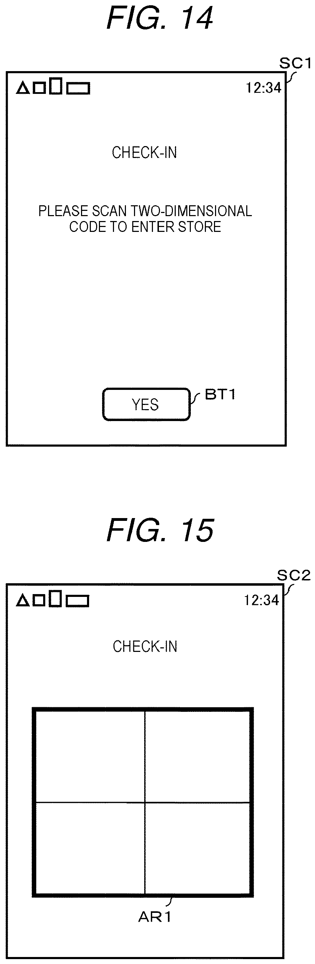

FIGs. 7 to 9 are flowcharts of information processing performed by the processor 31 of the user terminal 3 based on a shopping support program. FIGs. 10 and 13 are flowcharts of information processing performed by the processor 211 of the store server 21 based on the control program stored in the main memory 212 or the auxiliary storage device 213. FIGs. 11 and 12 are flowcharts of information processing performed by the processor 221 of the virtual POS server 22 based on the control program stored in the main memory 222 or the auxiliary storage device 223. FIGs. 14 to 22 are schematic diagrams illustrating various screens displayed on the touch panel 34 of the user terminal 3. Hereinafter, a main operation of the commodity sales processing system 1 including the commodity sales system 2 and the user terminal 3 will be described with reference to the drawings. In the description of the operation, a commodity sales processing method of the commodity sales system 2 will be described. Further, the operation to be described below is exemplary. Any operation or sequence of the operation may be employed as long as the same result can be obtained.

When a customer goes to a store at which the commodity sales processing system 1 has been introduced, the shopping support program installed in the user terminal 3 should be activated before the customer starts shopping. Then, the processor 31 starts information processing illustrated in the flowcharts of FIGs. 7 to 9.

In ACT101, the processor 31 first controls the touch panel 34 to display a check-in screen SC1 (see FIG. 14).

FIG. 14 illustrates an example of a check-in screen SC1. As illustrated in FIG. 14, a message for giving an instruction to scan a two-dimensional code for entering the store (checking-in) and an image of a "Yes" button BT1 are displayed on the check-in screen SC1. The customer who has confirmed the check-in screen SC1 touches the "Yes" button BT1.

In ACT102, the processor 31 activates the camera 35 when it is detected that the "Yes" button BT1 on the check-in screen SC1 has been touched in accordance with a signal from the touch panel 34. In ACT103, the processor 31 controls the touch panel 34 to display a camera screen SC2 (see FIG. 15).

FIG. 15 illustrates an example of the camera screen SC2. As illustrated in FIG. 15, an image AR1 indicating a reading area of a two-dimensional code is displayed on the camera screen SC2. The customer who checks the camera screen SC2 holds the user terminal 3 over the data code 5 presented at the entrance of the store so that the data code 5 fits in the image AR1.

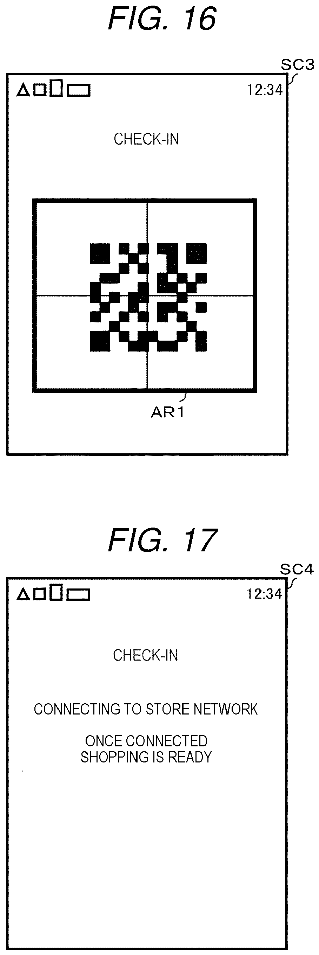

In ACT104, after the camera screen SC2 has been displayed, the processor 31 waits for the camera 35 to read the two-dimensional data code. As illustrated in FIG. 16, when the data code fits in the image AR1, the processor 31 determines that the data code can be read. The processor 31 determines YES in ACT104 and the process proceeds to ACT105.

In ACT105, the processor 31 analyzes the data code captured by the camera 35. In ACT106, the processor 31 determines whether the read data code is the data code 5 in which the store entering flag is set to "1."

When the data code read by the camera 35 is not the data code 5 in which the store entering flag is set to "1", the processor 31 determines NO in ACT106 and the process returns to ACT104. The processor 31 waits again for the camera 35 to read the two-dimensional data code.

When the data code read by the camera 35 is the data code 5 in which the store entering flag is set to "1," the processor 31 determines YES in ACT106 and the process proceeds to ACT107. In ACT107, the processor 41 stores the store setting information 50 including the store entering flag, the company code, the store code, the wireless connection information, and the control information obtained indicated by the data code 5, in the area 321 of the internal memory 32.

In ACT108, the processor 31 controls the touch panel 34 to display a wireless connection screen SC4 (see FIG. 17).

FIG. 17 illustrates an example of the wireless connection screen SC4. As illustrated in FIG. 17, a message indicating that the user terminal 3 is connecting to a store network and shopping is ready once the connection is completed, is displayed on the wireless connection screen SC4. Thus, a shopper waits for the user terminal 3 to be wirelessly connected to the store.

In ACT109, the processor 41 controls the wireless unit 36 to connect to the store network using the wireless connection information of the store setting information 50 stored in the area 321. Here, when the connection to the wireless network inside the store is not made even after the time corresponding to the timeout time included in the control information of the store setting information 50 has elapsed, the processor 31 repeatedly retries for the number of retries included in the control information. If the connection with the wireless network inside the store is not possible even after the retry has been repeated the maximum number of times, the processor 31 determines NO in ACT 109 and outputs a communication error. The processor 31 executes a retry for connection, for example, after a certain time interval.

As illustrated in FIG. 10, the processor 211 of the store server 21 waits for the user terminal 3 to be connected in ACT201. When the user terminal 3 is wirelessly connected to the store server 21 via the access point 25, the processor 211 determines YES in ACT201 and the process proceeds to ACT202. In ACT202, the processor 211 controls the communication interface 214 to transmit a command requesting a company code and a store code to the user terminal 3. Through this control, a code request command is transmitted from the communication interface 214 to the user terminal 3. The code request command is wirelessly transmitted from the access point 25 and is received by the wireless unit 36 of the user terminal 3.

When the user terminal 3 is wirelessly connected in the store, the processor 31 of the user terminal 3 determines YES in ACT109 and the process proceeds to ACT110. In response to the code request command from the store server 21, the processor 31 controls the wireless unit 36 to wirelessly transmit the company code and the store code included in the store setting information 50 in ACT110. Through this control, the data of the company code and the store code are wirelessly transmitted from the wireless unit 36, and the data is received by the store server 21 via the access point 25.

In ACT203 of FIG. 10, the processor 211 of the store server 21 waits for the data of the company code and the store code. When the data of the company code and the store code is received via the communication interface 214, the processor 211 determines YES in ACT203 and the process proceeds to ACT204. The processor 211 compares the store code and the commodity code received in ACT204 with the store code and the company code stored in the main memory 212. In ACT205, the processor 211 determines whether the store codes and the company codes are identical.

When at least one of the store code or the company code does not match in the comparison, the processor 211 determines NO in ACT205 and the process proceeds to ACT206. In ACT206, the processor 211 controls the communication interface 214 to transmit a negative response command to the user terminal 3. Through this control, the negative response command is transmitted from the communication interface 214 to the user terminal 3. The negative response command is wirelessly transmitted from the access point 25 and is received by the wireless unit 36 of the user terminal 3. The processor 211 controlling the transmission of the negative response command ends the information processing of the sequence illustrated in the flowchart of FIG. 10.

Conversely, when both the store codes and the company codes match , the processor 211 determines YES in ACT205 and the process proceeds to ACT207. In ACT207, the processor 211 controls the communication interface 214 to transmit a permission response command to the user terminal 3. Through this control, the permission response command is transmitted from the communication interface 214 to the user terminal 3. The permission response command is wirelessly transmitted from the access point 25 and is received by the wireless unit 36 of the user terminal 3.

In ACT208, the processor 211 updates the management table 331 stored in the user terminal 3. Specifically, the processor 211 checks whether there is a third field F3 in which the combination code An of the company code and the store code stored in the store server 21 is set in the management table 331. When there is no such a third field F3, the processor 211 adds the third field F3 for the combination code An to the management table 331. Then, setting flags are set to the third field F3. That is, in the record in which the type of the first field is "C," a setting flag "1" is set to the third field F3 when the credit card specified with the identification information of the second field F2 is accepted by the store. The setting flag "0" is set when the credit card is not accepted. Additionally, in the record in which the type of the first field is "P," the setting flag "1" is set to the third field F3 when the membership card specified with the identification information of the second field F2 is usable in the store. The setting flag "0" is set when the membership card is not usable. In the record in which the type of the first field is "R," the setting flag "1" is set to the third field F3 when the electronic receipt service is provided by the store. The setting flag "0" is set when the electronic receipt service is not provided.

Conversely, when there is already the third field F3 in which the combination code An of the company code and the store code stored in the store server 21 is set, the processor 211 checks whether the setting flags of the third field F3 are correct in a similar way.

In this way, when the updating of the management table 331 is completed, in ACT209, the processor 211 controls the communication interface 214 to transmit a command to request the user terminal 3 for transmitting the terminal ID. Through this control, an ID request command is transmitted from the communication interface 214 to the user terminal 3. The ID request command is wirelessly transmitted from the access point 25 and is received by the wireless unit 36 of the user terminal 3.

In ACT111 of FIG. 7, the processor 31 waits for receiving the permission response command. When the negative response command is received in the waiting state, the processor 31 determines NO in ACT111 and the process ends as an error.

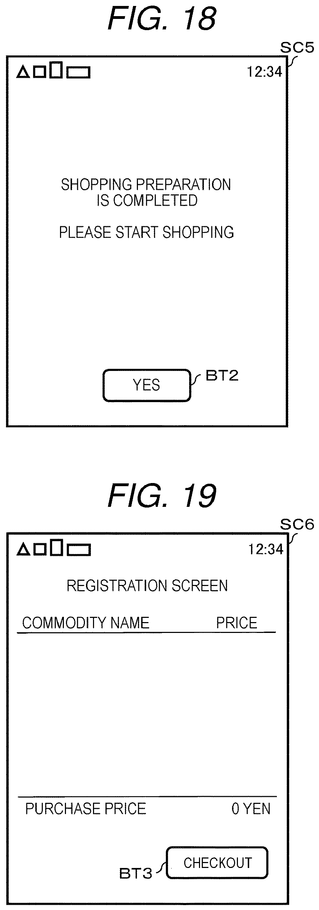

Conversely, when he permission response command is received, the processor 31 determines YES in ACT111 and the process proceeds to ACT112. The processor 31 responses to the ID request command from the store server 21 and controls the wireless unit 36 to transmit the terminal ID stored in the internal memory 32. Through this control, the terminal ID is wirelessly transmitted from the wireless unit 36 and the terminal ID is received by the store server 21 via the access point 25. In ACT113, the processor 31 controls the touch panel 44 to display a check-in completion screen SC5 (see FIG. 18).

FIG. 18 illustrates an example of the check-in completion screen SC5. As illustrated in FIG. 18, an image of a "Yes" button BT2 is displayed on the check-in completion screen SC5 along with a message indicating that shopping is ready. The customer who has confirmed the check-in completion screen SC5 touches the "Yes" button BT2.

The processor 211 of the store server 21 waits for receiving the terminal ID from the user terminal 3 in ACT210. When the processor 211 receives the terminal ID via the communication interface 214, the processor 211 controls the communication interface 214 to notify the virtual POS server 22 of the terminal ID. Through this control, the terminal ID is transmitted from the communication interface 214 to the virtual POS server 22. The terminal ID is received by the communication interface 224 of the virtual POS server 22. The processor 211 of the store server 21 ends the information processing of the sequence illustrated in the flowchart of FIG. 10.

As illustrated in FIG. 11, the processor 221 of the virtual POS server 22 waits for notification of the terminal ID in ACT301. When the terminal ID of which the store server 21 has notified via the communication interface 224 is received, the processor 221 determines YES in ACT301 and the process proceeds to ACT302. In ACT302, the processor 221 acquires the terminal ID of which the store server 21 has notified. Then, the processor 221 generates the registration table 70 in association with the terminal ID in the main memory 222.

In ACT304, the processor 221 controls the communication interface 224 to connect to the user terminal 3 having the terminal ID via the access point 25. When the connection has been established, the processor 221 waits for a response from the user terminal 3 in ACT305.

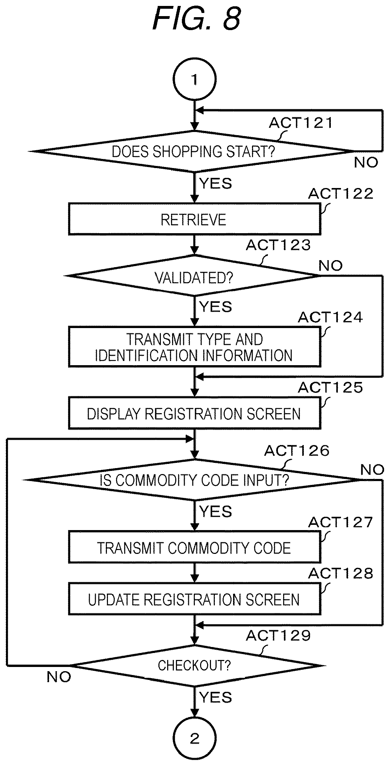

In ACT121 of FIG. 8, the processor 31 of the user terminal 3 waits for receiving an instruction to start shopping. When it is detected that the "Yes" button BT2 of the check-in completion screen SC5 has been touched in accordance with a signal from the touch panel 34, the processor 31 determines that the instruction to start shopping has been received. The processor 31 determines YES in ACT121 and the process proceeds to ACT122. In ACT122, the processor 31 retrieves the management table 331 with the company code and the store code of the store setting information 50 stored in the area 321. In ACT123, the processor 31 determines whether there is any record in which the setting flag "1" is set in the third field F3 in which the combination code An of the company code and the store code is assigned.

When there is at least one setting flag in which "1" is set in the third field F3, the processor 31 determines YES in ACT123 and the process proceeds to ACT124. In ACT124, the processor 31 controls the wireless unit 36 to transmit to the virtual POS server 22 the corresponding type and the identification information described in the first field F1 and the second field F2. Through this control, data of the type and the identification information is wirelessly transmitted from the wireless unit 36 and the data is received by the virtual POS server 22 via the access point 25.

After the type and the identification information have been transmitted, the process to proceed to ACT125. Conversely, when there is no setting flag in which "1" is set in the third field F3, the processor 31 determines NO in ACT123 and skips the process of ACT124, and the process proceeds to ACT125. In ACT125, the processor 31 controls the touch panel 34 to display a registration screen SC6 (see FIG. 19).

FIG. 19 illustrates an example of the registration screen SC6. As illustrated in FIG. 19, an area for displaying commodity names and prices of commodities and a purchase price is shown on the registration screen SC6. An image of a checkout button BT3 for giving an instruction for checkout is also displayed on the registration screen SC6. When the customer takes a commodity and puts it in a shopping basket or a shopping cart, the customer holds the user terminal 30 so that the camera 35 can read a barcode attached to the commodity. Then, the barcode is scanned with the camera 35. The barcode indicates the commodity code of the commodity.
when the data has been received through the communication interface 224 from the user terminal 30 in ACT305 of FIG. 11, the processor 221 of the virtual POS server 22 determines YES and the process proceeds to ACT306. In ACT306, the processor 221 checks whether the received data is the data of the type and the identification information. When the received data is the data of the type and the identification information, the processor 221 determines YES in ACT306 and the process proceeds to ACT307. In ACT307, the processor 221 stores the data of the type and the identification information in the registration table 70 associated with the terminal ID of the user terminal 3. Thereafter, the processor 221 returns the process to ACT305 and waits for receiving subsequent data from the user terminal 3.

After the registration screen SC6 has been displayed in ACT125 of FIG. 8, the processor 31 of the user terminal 3 checks whether a commodity code is input in ACT126. When the commodity code is not input, the processor 31 determines NO in ACT126 and the process proceeds to ACT129. In ACT129, the processor 31 checks whether the checkout button BT3 has been touched. When the checkout button BT3 has not been touched, the processor 31 determines NO in ACT129 and the process returns to ACT126. Here, the processor 31 waits for inputting the commodity code or inputting the touch button BT3 in ACT126 and ACT129.

When the barcode is scanned with the camera 35 and the commodity code is input from the data of the barcode in the waiting state of ACT126 and ACT129, the processor 31 determines YES in ACT126 and the process proceeds to ACT127. In ACT127, the processor 31 controls the wireless unit 36 to transmit the commodity code to the virtual POS server 22. Through this control, the commodity code is wirelessly transmitted from the wireless unit 36 and the commodity code is received by the virtual POS server 22 via the access point 25.

When the data received from the user terminal 3 is not the data of the type and the identification information in ACT306, the process proceeds to ACT308. In ACT308, the processor 221 checks whether the received data is a commodity code. When the received data is the commodity code, the processor 221 determines YES in ACT308 and the process proceeds to ACT309. In ACT309, the processor 221 retrieves the commodity file 62 with the commodity code and acquires the commodity data such as the commodity name, the price, and the like stored in association with the commodity code. When the commodity data is acquired, the processor 221 generates sales data of the commodity identified with the commodity code based on the commodity data and registers the sales data in the registration table 70 associated with the terminal ID of the user terminal 3 in ACT310. In ACT311, the processor 221 controls the communication interface 224 to transmit data indicating registration content of the registration table 70 including the sales data to the user terminal 3. Through this control, the data indicating the registration content is transmitted from the communication interface 224 and the data indicating the registration content is wirelessly transmitted from the access point 25 to be received by the user terminal 3. The processor 22 then returns the process to ACT305 and waits for receiving subsequent data.

After the commodity code has been transmitted in ACT127 of FIG. 8, in ACT128, the processor 31 of the user terminal 3 updates the registration screen SC6 based on the data indicating the registration content received from the virtual POS server 22.

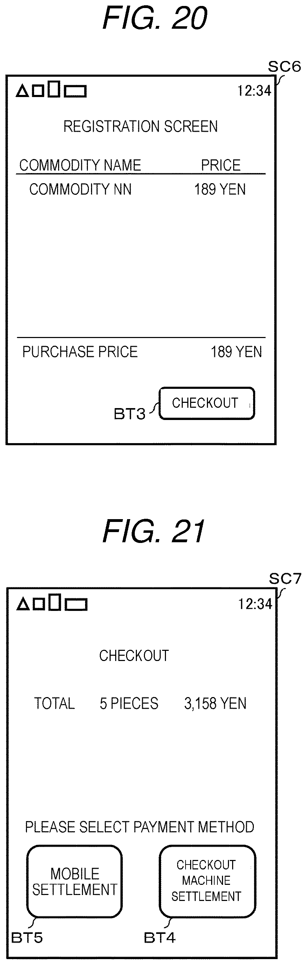

FIG. 20 illustrates an example of the updated registration screen SC6. FIG. 20 illustrates the registration screen SC6 after the commodity code of a commodity NN with its unit price of 189 yen is input as a first purchase commodity. The name and unit price of the commodity NN are displayed on the registration screen SC6. The purchase price of 189 yen is also displayed.

After the registration screen SC6 has been updated, the process proceeds to ACT129. That is, the processor 31 enters the waiting state of ACT126 and ACT129.

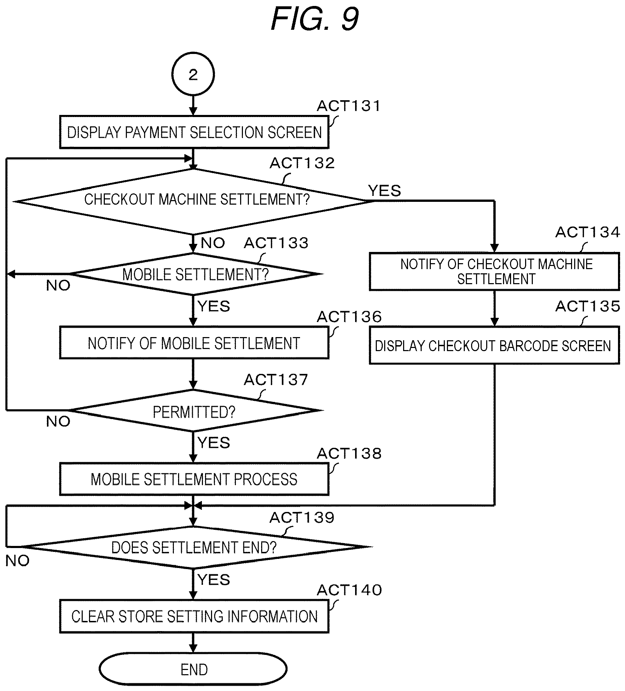

When the customer ends the shopping, the customer touches the checkout button BT3 of the registration screen SC6. When the touch on the checkout button BT3 is detected with a signal from the touch panel 34, the processor 31 determines YES in ACT129 and the process proceeds to ACT131 of FIG. 9. In ACT131, the processor 31 controls the touch panel 34 to display a payment selection screen SC7 (see FIG. 21).

FIG. 21 illustrates an example of the payment selection screen SC7. As illustrated in FIG. 21, images of buttons BT4 and BT5 for selecting a payment method are displayed along with the total number of commodities to be purchased and the total purchase price on the payment selection screen SC7. The button BT4 is a button for selecting checkout machine settlement as a payment method. The button BT5 is a button for selecting mobile settlement as a payment method.

In the checkout machine settlement, payment is made by cash, credit card, or electronic money by using the checkout machine 24. In the mobile settlement, payment is made with a barcode or a two-dimensional code by using the user terminal 3. The mobile settlement is also referred to as code settlement, smartphone settlement, or the like.

The customer who has confirmed the payment selection screen SC7 determines whether to use the checkout machine settlement or the mobile settlement. The customer touches the button BT4 when the customer uses the checkout machine settlement. The customer touches the button BT5 when the customer uses the mobile settlement.

After the payment selection screen SC7 has been displayed in ACT131, the processor 31 checks in ACT132 whether the checkout machine settlement is selected. When the checkout machine settlement is not selected, the processor 31 determines NO in ACT132 and the process proceeds to ACT133. In ACT133, the processor 31 checks whether the mobile settlement is selected. When the mobile settlement is not selected, the processor 31 determines NO in ACT133 and returns the process to ACT132. Here, the processor 31 waits for selection of the checkout machine settlement or the mobile settlement in ACT132 and ACT133.

When it is detected that the button BT4 of the payment selection screen SC7 is touched in accordance with a signal from the touch panel 34, the processor 31 determines that the checkout machine settlement is selected. The processor 31 determines YES in ACT132 and the process proceeds to ACT134. In ACT134, the processor 31 controls the wireless unit 36 to notify the virtual POS server 22 of the selection of the checkout machine settlement. Through this control, the data for notifying of the checkout machine settlement is wirelessly transmitted from the wireless unit 36 and the data is received by the virtual POS server 22 via the access point 25.

When the data that has been received from the user terminal 3 is neither the data of the type and the identification information nor the commodity code, the processor 221 determines NO in ACT308 and the process proceeds to ACT321 of FIG. 12. In ACT321, the processor 221 checks whether the received data is data for notifying of the checkout machine settlement. When the received data is the data for notifying of the checkout machine settlement, the processor 221 determines YES in ACT321 and the process proceeds to ACT322. In ACT322, the processor 221 generates a checkout code. The checkout code is a unique code generated to identify the registration table 70 associated with the terminal ID of the user terminal 3.

In ACT323, the processor 21 stores the generated checkout code in the registration table 70 associated with the terminal ID of the user terminal 3. In ACT324, the processor 221 controls the communication interface 224 to transmit the checkout code to the user terminal 3. Through this control, the checkout code is transmitted from the communication interface 224, the checkout code is wirelessly transmitted from the access point 25, and the checkout code is received by the user terminal 3. In ACT325, the processor 221 transmits the data of the registration table 70 in which the checkout code is stored to the store server 21. Then, the processor 221 ends the information processing of the sequences illustrated in the flowcharts of FIGs. 11 and 12.

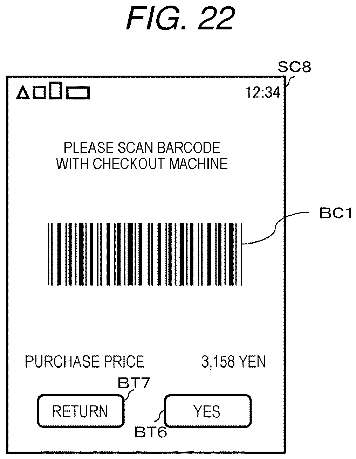

The processor 31 of the user terminal 3 that has notified of the checkout machine settlement in ACT134 of FIG. 9 controls the touch panel 44 to display a checkout barcode screen SC8 (see FIG. 22) using the checkout code received from the virtual POS server 22 in ACT135.

FIG. 22 illustrates an example of the checkout barcode screen SC8. As illustrated in FIG. 22, a checkout code BC and a message for prompting scanning of the checkout barcode BC1 with the checkout machine 24 are displayed. An image of a "Yes" button BT6 for the customer's confirmation and a "Return" button BT7 for returning to the previous screen are displayed on the checkout barcode screen SC8.

The customer who has confirmed the checkout barcode screen SC8 touches the "Yes" button BT6. The customer then goes to a place in which the checkout machine 24 is installed and present the checkout barcode BC1 so that a scanner of the unoccupied checkout machine 24 can read the checkout barcode BC1. The checkout machine 24 that has read the checkout barcode BC1 transmits an inquiries to the store server 21 with the checkout code represented by the checkout barcode BC1.

FIG. 9 is referred to back for description.

When it is detected that the button BT5 of the payment selection screen SC7 has been touched with a signal from the touch panel 34, the processor 31 of the user terminal 3 determines that the mobile settlement is selected. The processor 31 determines YES in ACT133 and the process proceeds to ACT136. In ACT136, the processor 31 controls the wireless unit 36 to notify the virtual POS server 22 of the selection of the mobile settlement. Through this control, data for notifying of the mobile settlement is wirelessly transmitted from the wireless unit 36 and the data is received by the virtual POS server 22 via the access point 25.

When the data that has been received from the user terminal 3 is neither the data of the type and the identification information and the commodity code nor the data for notifying of the checkout machine settlement in ACT321 of Fig. 12, the processor 221 of the virtual POS server 22 determines NO in ACT321, and the process proceeds to ACT326. In ACT326, the processor 221 checks whether the received data is the data for notifying of the mobile settlement. When the received data is not the data for notifying of the mobile settlement, the processor 221 determines NO in ACT326. After a process in accordance with the received data is performed, the processor 221 returns to the reception waiting state of ACT305.

When the received data is the data for notifying of the mobile settlement, the processor 221 determines YES in ACT326 and the process proceeds to ACT327. In ACT327, the processor 221 checks whether the mobile settlement is available. For example, there are a store in which the mobile settlement is available and a store in which the mobile settlement is not available. Alternatively, even in a store in which the mobile settlement is usually available, the mobile settlement is temporarily not available due to some reasons. When the mobile settlement is not available in the store, the processor 221 determines NO in ACT327 and the process proceeds to ACT328. In ACT328, the processor 221 controls the communication interface 224 to transmit a negative response to the user terminal 3. Through this control, data of the negative response is transmitted from the communication interface 224, the data is wirelessly transmitted from the access point 25, and the data is received by the user terminal 3. After the negative response has been transmitted, the processor 221 returns to the reception waiting state of ACT305.

Conversely, when the mobile settlement is available in the store, the processor 221 determines YES in ACT327 and the process proceeds to ACT329. In ACT329, the processor 221 controls the communication interface 224 to transmit a permission response to the user terminal 3. Through this control, data of the permission response is transmitted from the communication interface 224, the data is wirelessly transmitted from the access point 25, and the data is received by the user terminal 3. Then, the processor 221 ends the information process of the sequences illustrated in the flowcharts of FIGS. 11 and 12.

The processor 31 of the user terminal 3 that has notified of the mobile settlement in ACT136 of FIG. 9, checks whether the permission response is received in ACT137. When the negative response is received rather than the permission response, the processor 31 determines NO in ACT137 and the process returns to ACT132. At this time, a message indicating that the mobile settlement is not available is popped up and displayed on the payment selection screen SC7. The processor 31 waits for selecting the checkout machine settlement.

When the permission response is received in ACT137, the processor 31 determines YES and the process proceeds to ACT138. In ACT138, the processor 31 performs the mobile settlement process. Since the mobile settlement process is a known process, description will be omitted here.

When the mobile settlement process has been started in ACT138, the processor 31 waits for ending the settlement in ACT139. When the settlement ends, the processor 31 determines YES in ACT139 and the process proceeds to ACT140. In ACT140, the processor 31 clears the store setting information 50 stored in the area 321. Then, the processor 31 ends the information process in accordance with the shopping support program.

FIG. 13 is a flowchart of information processing performed by the processor 211 of the store server 21 to which data of the registration table 70 is to be transmitted from the virtual POS server 22. That is, in ACT221, the processor 211 waits for the data of the registration table 70 transmitted from the virtual POS server 22. When the data of the registration table 70 has been received via the communication interface 214, the processor 211 determines YES in ACT221 and the process proceeds to ACT222. In ACT222, the processor 211 stores the data of the registration table 70 in the volatile memory area of the main memory 212. Alternatively, the processor 211 stores the data of the registration table 70 in the auxiliary storage device 213.

The data of the registration table 70 stored in the main memory 212 or the auxiliary storage device 213 includes the type and the identification information that have been stored through the process of ACT307 of FIG. 11. In ACT223, the processor 211 checks whether the data of the registration table 70 includes identification information of the type "P." When the identification information of the type "P" is not included, the processor 211 determines NO in ACT223 and skips the process of ACT224, and the process proceeds to ACT225.

When the identification information of the type "P" is included, the processor 211 determines YES in ACT223 and the process proceeds to ACT224. In ACT224, the processor 211 performs service processing based on the identification information. For example, when the identification information indicates a membership card of a point service, a point is calculated based on the sales data of each commodity registered in the registration table 70 and is granted to the customer. For example, when the identification information indicates a membership card of a discount service, a sales price of the commodity registered in the registration table 70 is discounted. When the processor 211 ends the service processing, the process proceeds to ACT225.

In ACT255, the processor 211 waits for an inquiry about a checkout code from the checkout machine 24. As described above, when the checkout barcode BC1 is read by the checkout machine 24, the checkout machine 24 transmits an inquiry to the store server 21 with the checkout code represented by the checkout barcode. When the inquiry about the checkout code is received, the processor 211 determines YES in ACT225 and the process proceeds to ACT226. In ACT226, the processor 211 generates checkout data based on the sales data of the commodity registered in the registration table 70 in which the checkout code is stored. Then, the processor 211 controls the communication interface 224 to transmit the checkout data to the checkout machine 24. Through this control, the checkout data is transmitted to the checkout machine 24. In the checkout machine 24 that has received the checkout data, a settlement method is selected. As the settlement method, there is cash settlement, credit card settlement, electronic money settlement, or the like.

The processor 211 of the store server 21 that has output the checkout data checks whether the credit card settlement is selected in ACT227. When a settlement method other than the credit card settlement is selected, the processor 211 determines NO in ACT227 and the process proceeds to ACT231. The process of ACT231 will be described later.

Conversely, when the credit card settlement is selected, the processor 211 determines YES in ACT227 and the process proceeds to ACT228. In ACT228, the processor 221 checks whether the credit card settlement is possible. Specifically, the processor 211 checks whether identification information of the type "C" is stored in the registration table 70. When the identification information of the type "C" is not stored, a credit card owned by a customer who performs checkout is unusable in the store. In ACT228, the processor 211 determines NO and the process proceeds to ACT229. In ACT229, the processor 221 controls the communication interface 224 to transmit a negative response to the checkout machine 24. Through this control, data of the negative response is transmitted from the communication interface 224 to the checkout machine 24. In the checkout machine 24 that has received the data of the negative response, the customer is notified that the credit card settlement is unusable.

On the other hand, when the identification information of the type "C" is stored in the registration table 70, the credit card owned by the customer who performs checkout is usable in the store. In ACT228, the processor 211 determines YES and the process proceeds to ACT230. In ACT230, the processor 221 controls the communication interface 224 to transmit a permission response to the checkout machine 24. Through this control, data of the permission response is transmitted from the communication interface 224 to the checkout machine 24. In the checkout machine 24 receiving the data of the permission response, the credit card settlement is performed.

After the negative response or the permission response has been output in ACT229 or ACT230, the process proceeds to ACT231.

In ACT231, the processor 211 waits for ending the settlement in the checkout machine 24. When the settlement is completed, the processor 211 determines YES in ACT231 and the process proceeds to ACT232. In ACT232, the processor 211 checks whether a receipt is issued as an electronic receipt. That is, the processor 211 checks whether there is the identification information of the type "R" in the registration table 70.

When there is no identification information of the type "R," it is indicated that the settlement with the customer for which the receipt is not issued as the electronic receipt ends. In such a case, the processor 211 determines NO in ACT232 and ends the information processing of the sequence illustrated in the flowchart of FIG. 13.

Conversely, when there is the identification information of the type "R," the settlement with the customer for which the receipt is issued as the electronic receipt ends. Therefore, the processor 211 determines YES in ACT232 and the process proceeds to ACT233. In ACT233, the processor 231 performs an electronic receipt process. Specifically, the processor 211 performs a process of transmitting, to the electronic receipt server, data of the electronic receipt obtained by converting, for example, receipt-printed data into a structured format, along with the electronic receipt ID which is the identification information of the type "R." The process of converting the receipt-printed data into the structured format may be performed by the store server 21 or may be performed by the checkout machine 24. Alternatively, the process may be performed by another device other than the store server 21 or the checkout machine 24. When the electronic receipt process ends, the processor 211 ends the information processing of the sequence illustrated in the flowchart of FIG. 13.

Here, the processor 31 of the user terminal 3 performs the processes of ACT101 to ACT107 in accordance with the shopping support program. That is, the processor 31 inputs the store identification data of the store code and the company code of the store, the wireless connection information, the control information, and the like from the data code 5 which is presented in the store.

The processor 31 performs the processes of ACT126 and ACT127 in accordance with the shopping support program. That is, the processor 31 input the commodity identification data by acquiring a barcode of a commodity sold in the store with the camera 35.

The processor 211 of the store server 21 performs the processes of ACT201 to ACT203 in accordance with the control program. That is, the processor 211 acquires the store identification data input to the user terminal 3 from the user terminal 3 connected via the communication interface 14.

The processor 211 performs the processes of ACT204, ACT205, ACT207, and ACT209 in accordance with the control program. That is, when the store identification data acquired from the user terminal 3 is valid data, the processor 211 causes the user terminal 3 to enter a usable state.

The processor 221 of the virtual POS server 22 performs the processes of ACT301 to ACT303 in accordance with the control program. That is, the processor 221 generates the registration table 70 for each user terminal 3 that has entered the usable state .

The processor 221 performs the processes of ACT305 and ACT308 in accordance with the control program. That is, the processor 221 acquires the commodity identification data that has been input to the user terminal 3.

The processor 221 performs the processes of ACT309 and ACT310 in accordance with the control program. That is, the processor 221 acquires from the commodity file 62 the commodity data of the commodity identified with the commodity identification data that has been acquired from the user terminal 3, and performs a sales process on the commodity based on the commodity data. Specifically, the processor 221 performs a process of registering the sales data of the commodity in the registration table 70 for the user terminal 3.

The processor 221 performs the process of ACT311 in accordance with the control program. That is, the processor 221 controls the communication interface 224 to transmit at least the name and the price of the commodity on which the sales process is performed to the user terminal 3.

The processor 31 of the user terminal 3 performs the process of ACT128 in accordance with the shopping support program. That is, the processor 31 controls the touch panel 34 to display the name and the price of the commodity that have been received from the commodity sales system 2 on the registration screen SC6.

In the commodity sales processing system 1 that has the configuration described above, a communication terminal such as a smartphone owned by an individual customer entering a store can be connected to the virtual POS server 22 and the store server 21 of the store, and the communication terminal can be used as the user terminal 3 for performing self-service registration. Accordingly, in a plurality of stores in which the commodity sales processing system 1 has been introduced, the customer can perform self-service registration on a commodity using his or her own communication terminal.

In the aforementioned embodiments, the virtual POS server 22 generates the registration table 70 for each user terminal 3. Accordingly, even when several customers simultaneously perform self-service registration using their own communication terminals, the virtual POS server 22 can correctly handle the registration processes.

The virtual POS server 22 includes the commodity file 62 separately from the commodity master file 61 included in the store server 21. In the commodity file 62, at least a commodity name and a unit price of a commodity record stored in the commodity master file 61 are copied. Accordingly, the processor 221 of the virtual POS server 22 can acquire commodity data of a commodity identified with commodity identification data acquired from the user terminal 3 from the commodity file 62. Therefore, a process time is faster when the commodity master file is referred to. A communication amount of the wired LAN 26 can also be reduced. Further, whenever a commodity record stored in the commodity master file 61 is updated, a commodity record of the commodity file 62 is also updated in real time. Therefore, for example, even when a unit price of a commodity in the commodity master file 61 is changed because of a sales event or the like, a changed unit price of the commodity can be quickly reflected in the virtual POS server 22.

Further, a customer can check sales data of a commodity registered in the virtual POS server 22 by checking the touch panel 34 of the user terminal 3 in real time.

One or more embodiments have been described above, but modifications can be made as described below.

For example, the store server 21 and the virtual POS server 22 may be integrated into a single server.

For example, the virtual POS server 22 may perform the process routine of the store server 21 illustrated in FIG. 10. In such a case, when the processor 22 determines YES in ACT210 of FIG. 10, the processor 22 performs the process of ACT302 of FIG. 11.

In the foregoing embodiments, the data code 5 is a two-dimensional barcode or the like. Alternatively, one-dimensional barcode may be used depending on the amount of information included therein. When a contactless IC card is installed in the user terminal 3, an antenna for short-range wireless communication (also referred to as near-field communication) may be disposed at each store and the user terminal 3 may acquire the store setting information 50 through contactless wireless communication.

In the above-described example embodiments, the data code 5 including the store entering flag is discussed. In another embodiment, the data code 5 may not include the store entering flag. In such a case, when the processor 31 of the user terminal 3 omits the process step of ACT106 of FIG. 7 and analyzes the data code 5 in ACT105, the process proceeds to ACT107.

The data structure of the store setting information 50 is not limited to the data structure illustrated in FIG. 2. For example, when the processes are performed at only stores of a single company, a company code may be omitted from the store setting information 50.

In the above-described example embodiments, the management table 331 is provided in the external memory 33 of the user terminal 3. However, in other examples, the management table 331 need not necessarily be included in the user terminal 3. The management table 331 may be stored in a cloud storage which can be accessed by the user terminal 3 and the commodity sales system 2.

While certain embodiments have been described these embodiments have been presented by way of example only, and are not intended to limit the scope of the inventions. Indeed, the novel embodiments described herein may be embodied in a variety of other forms: furthermore various omissions, substitutions and changes in the form of the embodiments described herein may be made without departing from the scope of the inventions. The accompanying claims and their equivalents are intended to cover such forms or modifications as would fall within the scope of the invention.

## Claims

1. A checkout apparatus, comprising:
a network interface;
a memory that stores commodity data in which a name and a price of a commodity are associated with a commodity ID; and
a processor configured to:
control the network interface to establish a connection with a customer terminal,
determine whether a store code is valid upon receipt of the store code from the customer terminal,
control the network interface to transmit a command to the customer terminal for completing a check-in process in a store corresponding to the store code if the store code is valid,
retrieve, from the memory, a name and a price of a commodity associated with a commodity ID when the commodity ID is received from the customer terminal that has completed the check-in process, and
perform checkout processing using the retrieved name and price of the commodity when a request for checkout from the customer terminal is received.

2. The checkout apparatus according to claim 1, wherein the processor is further configured to generate registration data for storing the retrieved name and price of the commodity in the memory.

3. The checkout apparatus according to claim 1 or 2, wherein
the memory further stores master commodity data that maintains a name and a price of a commodity in association with a commodity ID, and
the processor is further configured to detect changes in the master commodity data and update the commodity data to match the changed master commodity data.

4. The checkout apparatus according to any one of claims 1 to 3, wherein
the memory further stores payment information indicating one or more payment methods accepted at the store, and
the processor is further configured to control the network interface to transmit the payment information to the customer terminal after the connection has been established.

5. The checkout apparatus according to claim 4, wherein the checkout processing uses a payment method selected by the customer terminal.

6. The checkout apparatus according to any one of claims 1 to 5, wherein the store code is represented by a two-dimensional code.

7. The checkout apparatus according to claim 6, wherein the store code is read by the customer terminal.

8. The checkout apparatus according to claim 6 or 7, wherein the two-dimensional code includes, encoded therein, connection information for the customer terminal to connect to the checkout system.

9. A checkout system, comprising:
the checkout apparatus according to any one of claims 1 to 8 configured as a server; and
a customer terminal configured to read a code displayed at a store and connect to the server using information encoded in the code, the encoded information including a network setting required to connect to the server and a store code of the store.

10. The checkout system according to claim 9, wherein the customer terminal displays the name and price of the commodity on a screen.

11. The checkout system according to claim 9 or 10, wherein the customer terminal is configured as a hand-held mobile terminal.

12. The checkout system according to any one of claims 9 to 11, wherein the customer terminal is configured to be attached to a shopping card.

13. A checkout method, comprising:
storing, in a memory of a server, commodity data in which a name and a price of a commodity are associated with a commodity ID;
establishing a connection between a customer terminal and the server;
upon receipt of a store code from the customer terminal, determining whether the store code is valid;
transmitting from the server to the customer terminal a command for completing a check-in process in a store corresponding to the store code if the store code is valid;
upon receipt of a commodity ID from the customer terminal that has completed the check-in process, retrieving from the memory a name and a price of a commodity associated with the received commodity ID; and
performing checkout processing using the retrieved name and price of the commodity when a request for checkout from the customer terminal is received.

14. The checkout method according to claim 13, further comprising generating registration data for storing the retrieved name and price of the commodity in the memory.

15. The checkout method according to claim 13 or 14, further comprising:
storing in the memory master commodity data that maintains a name and a price of a commodity in association with a commodity ID, and
detecting changes in the master commodity data and update the commodity data to match the changed master commodity data.
